# EUROPÄISCHE PATENTANMELDUNG

(11) **EP 1 004 262 A2**
(43) Veröffentlichungstag der Anmeldung: **31.05.2000**
(21) Anmeldenummer: 99111753.2
(22) Anmeldetag: 18.06.1999
(51) Int. Cl.: A47J 31/06, A47J 31/46, A47J 31/44

(54) **Ein sparender Portions-Aroma Kaffeeaufbrühfilter**

(30) Priorität: 25.11.1998 DE 19854283; 25.03.1999 DE 19913781; 19.04.1999 DE 19918259
(71) Anmelder: Brandt, Werner, 52070 Aachen (DE); Kolvenbach, Heinrich, 52066 Aachen (DE); Touati, Rachid Ait, 6294 AW Vijlen (NL)
(72) Erfinder: Brandt, Werner, 52070 Aachen (DE); Kolvenbach, Heinrich, 52066 Aachen (DE); Touati, Rachid Ait, 6294 AW Vijlen (NL)

(57) **Zusammenfassung**

Der sparende Kaffeeaufbrühfilter (100) ist eine Weltneuheit verbunden das es der erste geschlossenen Kaffeefilter ist,eben ein Rund-Spitzfilter (15) mit (18) und (19) eine neue untere Wasserablauföffung von Kaffeewasser,und mit einem neuen Wassereinlauföffnung (6)-(7)-(8) und (9)Rundplatte.
Der sparende Kaffeeaufbrühfilter ist ein Produkt wo von man behaupten kann,wirtschaftlicher-müheloser und aromavoller geht es nicht mehr für alle Kaffeetrinker auf der Welt.
Ein sparender Kaffeeaufbrühfilter mit dem man von 1 bis 10 Tassen kaffee aufbrühen kann-und dazu der Kaffeefilter kleiner und die neue Papierfiltertüte sein wird,ohne Verlust zuhaben,auch bei 8 oder 6 tassenkaffee aufbrühen zu wollen.

## Beschreibung

### Anwendungsgebiet

Die Erfindung ist im Bereich der Zubereitung von Tassenportionen Filterkaffee einsetzbar bestehend aus geschmacksneutralen Material zur Herstellung vom einer bis zehn Tassenkaffee,und beinhaltet den ersten sparenden Kaffeeaufbrühfilter.

### Stand der Technik

Für das zubereiten eines Kaffeegetränkes aus gerösteten und gemahlenen Kaffeebohnen sind zahlreiche verschiedene Verfahren bekannt.

### Papierfilter

Zum Kaffeemehl aufbrühen benötigt man bis heute immer noch eine Papierfilter Grundlage-welche Rundflach sein kann,desweiteren mit einer gewissen Höhe V-Förmig sein kann,verbunden dazu noch in verschiedenen Größen.
Die Filterpapiertüten weisen dann außerdem noch verschiedene stärken auf,hier gleichmäßige-aber auch gibt es dann in der gleichmäßigen starke nochmals eine verteilte dünnere Rundloch stärke,also grob gesagt-Fein und Grob Papierfiltertüte. Alle bisherigen Filtertüten weisen oben dann eine große Rundöffnung auf.
Dann gibt es noch den V-Goldfilter,wo man eben keine Papierfilter tüte mehr benötigt,aber auch oben offen ist-und kein gutes Kaffeeaufbrühfiltern - wirtschaftlich-aromavoll und mühelos zubeurteilen ist.

### Kafffeefilter

Der Kaffeefilter beinhaltet hier nun die Aufnahme von der Papierfiltertüte mit Kaffeemehl eben zur Festigung-Aufnahme.
Auch hier gibt es verschiedene größen von Kaffeefilter passend eben zu den Papierfiltertüten,und auch alle Kaffeefilter weisen oben eine passende Rundöffnung auf-also es gibt noch keinen geschlossenen Kaffeefilter.

Das Kaffeeaufbrühfiltern,eben mit einem offenen Kaffeefilter-Papierfiltertüte,verbunden mit Kaffeemehl von 10 Tassenkaffee, beinhaltet noch kein 100% wirtschaftliches-müheloses und aromavolles aufbrühen.

Der jetzige Stand der Technik bezugnehmend auf den Kaffeefilter offenen,weist hier drei verschiedene größen auf,einmal vier-sechs acht und für zehn Tassenkaffee,somit also hier vier verschiedene Kaffeefilter Produkte es gibt,und alle dazu oben offen. Das gleiche bezieht sich dann auch auf den Papierfiltertüten-also auch vier verschiedene Papierfiltertüten Produkte,und auch alle oben offen.
Man rechnet pro Tassekaffee ca.6 gr.Kaffeemehl bei zehn Tassen waren es 60 gr.Kaffeemehl-wenn man sich dann den Kaffeefilter verbunden mit der Papierfiltertüte mit Inhalt für 10 Tassen Kaffe mehl anschaut,dann ist die hälfte wirtschaftlich als positiv zubeurteilen.
Wenn aber dann das Kaffeeaufbrühen-durch eine Kaffeemaschine vollzogen wird bei eben 10 Tassen,mit einem Wasserstrahl,wird man es feststellen,daß ca.2cm zuviel der Kaffeefilter und auch die Papierfiltertüte an größe aufweist,und dieses ergibt sich auch bei den kleineren Kaffeefilter-Papierfiltertüten,und somit dieser Stand der Technik nicht als wirtschaftlich man bezeichnen kann.

Keine Familie besitzt also drei verschiedene Kaffeefilter oder Papierfiltertüten-um eben bei Gebrauch von vier-sechs oder acht Tassenkaffee aufbrühen zu müssen,also auch hier ein verlust,wenn man einen 10 Tassenkaffeefilter-Papierfiltertüte nur hat,aber eben nur sechs Tassenkaffee aufbrühen möchte.

Das Kaffeemaschinen aufbrühen vollzieht sich immer noch mit einem runterlaufenden Wasserstrahl auf das Kaffeemehl,und zum anderen ohne kaffeemaschine,wird der erste Aufguß im Kaffeefilter voll ausgenutzt,und somit erreicht man kein aromavolles Kaffeemehl aufbrühen.

Kaffeemaschinen-Kaffeefilter und Papierfiltertüten beinhalten zum jetzigen Stand der Technik-kein 100% wirtschaftliches-müheloses und aromavolles Kaffeeaufbrühfiltern,alle in den letzten Jahren an Verbesserungen beinhalten hier nur eine Kosten Frage, und somit beinhaltet der sparende Kaffeeaufbrühfilter ein 100% wirtschaftliches-müheloses und aromavolles Kaffeeaufbrühfiltern für die Zukunft.

### Aufgabe,Lösung,Vorteile

Die Aufgabe der Erfindung besteht darin,einen Kaffeeaufbrühfilter aus einem Formkörper für das Herstellen von Filterkaffee vorzuschlagen ,der es ermöglicht,daß der Vorgang des auflösens von Kaffeemehl im kochenden Wasser hier gleichmäßig verlängert wird, und das gelöste Kaffeemehl möglichst vollständig in das Kaffeegetränk gespült wird.Der aus dem Formkörper bestehende sparende Kaffeeaufbrühfilter ist von einer bis zehn Tassenkaffee einsetzbar.

Die Lösung des sparenden Kaffeeaufbrühfilters beinhaltet einmal einen geschlossenen Kaffeeaufbrühfilter,verbunden mit einem neuen Wassereinlauf-System,sowie der sparende Kaffeeaufbrühfilter ein Rundspitzfilter ist,und kleiner als alle Kaffeefilter,well man von 1 bis 10 Tassenkaffee trotzdem kochen kann,und daher auch kleinere Papierfiltertüten benötigt.Ein sparender Kaffeeaufbrühfilter - mit einer gesamten Größe,und gesamten Papierfiltertüte von 1 bis zehn Tassenkaffee damit aufbrühen kann.

Der sparende Kaffeeaufbrühfilter weist hier nur wirtschaftlichemühelose und aromavolle vorteile auf.

Vorteil ist,daß es sich hier um einen geschlossenen sparenden Kaffeeaufbrühfilter handelt,bestehend aus einem Rund-Spitz förmigen Körper.
Vorteil ist,daß der Kaffeefilter kleiner ist,und damit aich bis 10 Tassenkaffee aufbrühen kann,verbunden dazu die passende Papierfiltertüte.
Vorteil ist,ob mit Kaffeemaschine-oder mit Hand ein neues Wassereinlauf-System vorfindet,undzwar bereits auf der obigen Kaffeemehl Fläche verteilt das Kaffeewasser gleichmäßig zum aufbrühen von oben nach unten vollzogen wird.
Vorteil ist,daß man außerdem weniger Kaffeemehl für 10 Tassenkaffee benötigt.
Vorteil ist,daß man mit den neuen Papierfiltertüten weniger Verlust hat.
Vorteil ist,daß es kein überlaufen mehr gibt von Kaffeewasser. Vorteil ist,der sparende Kaffeeaufbrühfilter ist wirtschaftlicher erreicht volles Aroma,und ist noch müheloser zum Kaffeemaschinen oder Hand aufbrühen.
Vorteil ist,der sparende Kaffeeaufbrühfilter hat ein neues Wasser einlauf-System,wie ein Wasserstrahl verteilt auf der Wassereinlauffläche-und kann identisch auch unten wieder ablaufen in einer Kaffeekanne.
Vorteil ist,man braucht für den sparenden Kaffeeaufbrühfilter nicht umbedingt eine Kaffeemaschine mehr.

Der sparende Kaffeeaufbrühfilter beinhaltet eine Weltneuheit für alle Kaffeetrinker -vom wirtschaftlichen-mühelosen und aromavollen Kaffeeaufbrühen.

### Beschreibung zur Zeichnung

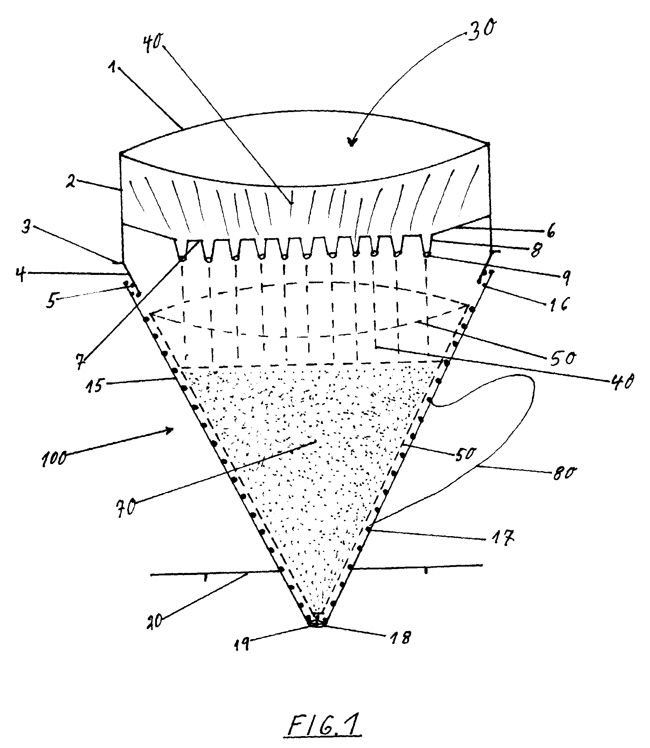

- **FIG.1**: Der sparende Portions-Aroma Kaffeeaufbrühfilter(100)ist ein geschlossener Kaffeeaufbrühfilter.
Mit (30) die Wassereinlauföffnung,mit (40)das Wasserwelches unter (8) in der vertieften Öffnung mit (9) auf das Kaffeemehl runter laufen wird.
Mit (1) die Rundöffnung,senkrecht vertieft wird mit (2),und darin befindet sich mit (6) eine Rundschrägung von ca.2cm, und mit (7)eine waagerechte Lochplatte sich mit den Löchern verteilt sich befindetzu (8) und (9. Außen befindet sich dann mit (3)eine waagerechte Auflagerung auf den Kaffeeaufnahmefilter(15),mit (4) dann eine vertiefte-schräge Halterung im Aufnahmefilter(15),und mit (5)ein Gewinde zum auf und zu drehen im Aufnahmefilter(15).
Mit (15) hier dann der Spitz-Rund Kaffeeaufbrühfilter,welch er oben Innen mit (16) auch ein Gewinde aufweist zum auf un zu drehen des obenren Wassersystems.Innen im Aufnahmefilter (15) befindet sich dann verteilt hier mit (17) Rundkugeln, damit zwischen (15) und der Filtertüte(50) Luftraum vorhanden sein wird.und mit (70) lagert das Kaffeemehl.
In dem Aufnahmefilter(15) wird man unten mit (18) die Kaffeewasserauflauföffnung vorfinden,welche in der Mitte mi (19)zwei Rillen aufweist wo sich mit(17) auch Rundkugeln befinden,eben zur Luftraum lagerung der Filtertüte(50).
Mit (20) befindet sich dann eine Rundplatte -Festigung außen zu (15) zur Lagerung auf einer Kaffeekanne u.a.

## Patentansprüche

1. Der sparende Kaffeeaufbrühfilter(100) bestehend aus einem geschlossenen Kaffeefilter.

2. Der sparende Kaffeeaufbrühfilter nach Anspruch 1,dadurch gekennzeichnet,das mit(1) eine Rundöffnung aufweist,mit (2) innen eine senkrechte vertiefung aufweist.

3. Der sparende Kaffeeaufbrühfilter nach Anspruch 2,dadurch gekennzeichnet,mit (6) eine Innen Rundschrägung aufweist,und mit (7)eine waagerechte Rundplatte,mit vertieften Spitzlöchern (8) und (9).

4. Der sparende Kaffeeaufbrühfilter nach Anspruch 3,dadurch gekennzeichnet,mit (3) eine waagerechte Rundlagerungaußen.

5. Der sparende Kaffeeaufbrühfilter nach Anspruch 4,dadurch gekennzeichnet,eine senkrechte-vertiefte Schrägung(4) mit einen Rundgewinde(5).

6. Der sparende Kaffeeaufbrühfilter nach Anspruch 5,dadurch gekennzeichnet,mit (15) einen senkrechten Spitzaufnahmefilter, und innen mit ein Rundgewinde (16),und mit (17) innen eine Rundkugel-Lufthalterung für Papierfilter (50).

7. Der sparende Kaffeeaufbrühfilter nach Anspruch 6,dadurch gekennzeichnet,unten eine wasserablauföffnung (18) aufweist, und darin mit (19)eine waagerecht Streifenstrebung mit(17) den Rundkugeln -Lufthalterung für Papierfilter(50) aufweist.

8. Der sparende Kaffeeaufbrühfilter nach Anspruch 7,dadurch gekennzeichnet,mit (20) eine waagerechte Rundplatte zur Festtigung -Lagerung auf einer Kaffeekanne-Behälter.
